(19)

Europäisches
Patentamt
European
Patent Office
Office européen
des brevets

(11) **EP 3 450 519 A1**

(12) **EUROPEAN PATENT APPLICATION**
published in accordance with Art. 153(4) EPC

(43) Date of publication:
**06.03.2019 Bulletin 2019/10**

(21) Application number: **17789403.7**

(22) Date of filing: **20.04.2017**

(51) Int Cl.:
*C09J 7/00* (2018.01)    *C09J 7/02* (2006.01)
*C09J 11/06* (2006.01)    *C09J 133/04* (2006.01)

(86) International application number:
**PCT/JP2017/015904**

(87) International publication number:
**WO 2017/188120 (02.11.2017 Gazette 2017/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.04.2016 JP 2016091426**

(71) Applicant: **Zeon Corporation
Tokyo 100-8246 (JP)**

(72) Inventor: **SONE, Atsushi
Tokyo 100-8246 (JP)**

(74) Representative: **Maiwald Patent- und
Rechtsanwaltsgesellschaft mbH
Elisenhof
Elisenstraße 3
80335 München (DE)**

(54) **SELF-ADHESIVE LAYER**

(57)    A self-adhesive layer including reaction result-
ant of a resin composition, the resin composition including resin and a crosslinking agent and/or an initiator,
wherein glossiness is 33 to 90, and an amount of generating formaldehyde is no more than 2 ppm, the self-ad-
hesive layer provided having good air removability, the
amount of formaldehyde generated from the self-adhe-
sive layer provided being reduced.

## Description

Technical Field

The present invention relates to a self-adhesive layer and a self-adhesive laminate.

Background Art

In recent years, a self-adhesive sheet member (hereinafter referred to as "self-adhesive sheet" or "self-adhesive layer") has been utilized as a sticking sheet used by being stuck to a smooth adherend such as window glass. Adhesive manners of a self-adhesive sheet are broadly classified into pasting with glue by utilizing adhesion of material itself of a sheet, and adsorption to an adherend according to a suction cup effect utilizing microcavities formed on a sheet. A self-adhesive sheet to adhere in both adhesive manners in combination is also used. A self-adhesive sheet is preferably employed for various uses such as building decoration materials represented by interior decorative materials including wallpaper, and sticking materials for posters, stickers, etc. for advertising. Generally, a base material such as a resin film is laminated to a self-adhesive layer in order to employ the layer for these uses, and is decorated by printing etc. Hereinafter a laminate including a self-adhesive layer and a supporting layer that consists of a base material will be referred to as a "self-adhesive laminate".

As a self-adhesive laminate, for example, Patent Literature 1 discloses a sheet obtained by coating a base material with foam that is formed by foaming a resin composition that contains a (meth)acrylate copolymer resin having no N-methylol group and an oxazoline crosslinking agent in the molecule, then to be heated and dried, to solidify the foam. Patent Literature 1 also describes that this sheet does not generate at all or hardly generates formaldehyde.

Citation List

Patent Literature

Patent Literature 1: JP 2006-176693 A

Summary of Invention

Technical Problem

Such a property that air is hard to stay when a self-adhesive layer is stuck onto a smooth adherend, that is, "air removability" is demanded of a self-adhesive layer. The air removability of the sheet of Patent Literature 1 is sometimes insufficient since a (meth)acrylate copolymer resin having a carboxyl group is used, which raises the gel fraction of the(meth)acrylate copolymer resin, to facilitate formation of irregular unevenness on a surface of the sheet.

On the other hand, material generating formaldehyde, which is a causative agent of sick house syndrome, in use has been often used in a self-adhesive layer since long before, and reduction of the amount of this generation is strongly demanded. The sheet of Patent Literature 1 makes it possible not to generate at all or to hardly generate formaldehyde. However, reduction of the amount of formaldehyde generated from a self-adhesive layer that was developed later is demanded as well.

An object of the present invention is to provide a self-adhesive layer and a self-adhesive laminate of good air removability, the amount of formaldehyde generated from which is reduced.

Solution to Problem

As a result of deliberate research of the inventor etc. in view of the problems, they found that glossiness of a surface of a sheet, which is an index of smoothness of a self-adhesive layer, within a predetermined range can improve air removability, which is realizable while the amount of generating formaldehyde is reduced, to complete the present invention.

That is, a first aspect of the present invention is a self-adhesive layer comprising reaction resultant of a resin composition, the resin composition including resin and a crosslinking agent and/or an initiator, wherein glossiness is 33 to 90, and an amount of generating formaldehyde is no more than 2 ppm.

In the present invention, "reaction resultant of a resin composition" means a conjugate formed by at least intramolecular or intermolecular linked structures in polymer that constitute the resin included in the resin composition.

In the present invention, "glossiness" means glossiness measured at 60° of an incident angle, conforming to JIS Z 8741.

In the present invention, "amount of generating formaldehyde" means the concentration of formaldehyde measured by the following method.

A separator film is stuck onto the self-adhesive layer of the present invention, thereafter to be cut out into a size of 200 mm × 200 mm, to prepare a test piece. The test piece is put into a Tedlar bag of 5 L in volume, and is hermetically sealed up therein. The bag is charged with 2 L of air, and is left to stand in a constant temperature oven that is set at 23°C and RH 50% for 6 hours, and thereafter the concentration of formaldehyde (ppm) in the bag is measured with a detector tube (No. 91L manufactured by Gastec Corporation).

In the first aspect of the present invention, the resin is preferably a (meth)acrylate copolymer resin. In the present invention, "(meth)acrylate" means "acrylate and/or methacrylate".

In the first aspect of the present invention, a glass transition temperature of the (meth)acrylate copolymer resin is preferably no more than -10°C.

In the first aspect of the present invention, preferably, the (meth)acrylate copolymer resin has a N-methylol group, and has a gel fraction of no more than 70%.

In the first aspect of the present invention, the resin composition is preferably foam.

In the first aspect of the present invention, foaming magnification of the foam is preferably 1.1 to 4 times.

In the first aspect of the present invention, the crosslinking agent is preferably a carbodiimide crosslinking agent.

In the first aspect of the present invention, the resin composition preferably contains 100 parts by mass of the (meth)acrylate copolymer resin, and 0.1 to 20 parts by mass of a carbodiimide crosslinking agent.

A thickness of the self-adhesive layer according to the first aspect of the present invention is preferably 0.005 mm to 0.5 mm.

A second aspect of the present invention is a self-adhesive laminate comprising: the self-adhesive layer according to the first aspect of the present invention; and a supporting layer consisting of a base material.

In the second aspect of the present invention, the base material is a plastic sheet or a paper base.

Advantageous Effects of Invention

The present invention can provide a self-adhesive layer and a self-adhesive laminate of good air removability, the amount of formaldehyde generated from which is reduced.

Brief Description of Drawings

Fig. 1 is an explanatory flowchart of one embodiment of a method for producing the self-adhesive layer of the present invention.
Fig. 2 is a schematic view showing arrangement of a coater, an upper drying oven, and a crosslinking oven which were used in Examples and Comparative Examples.

Description of Embodiments

Hereinafter embodiments of the present invention will be described. The embodiments described below are examples of the present invention, and the present invention is not limited thereto. In the present invention, "film" includes "sheet" and "sheet" includes "film".

1. Self-adhesive layer

The self-adhesive layer of the present invention is a self-adhesive layer comprising reaction resultant of a resin composition, the resin composition including resin and a crosslinking agent and/or an initiator, wherein glossiness is 33 to 90, and an amount of generating formaldehyde is no more than 2 ppm.

<Characteristics>

The glossiness of the self-adhesive layer of the present invention is 33 to 90, preferably 37 to 90, and more preferably 45 to 90. The glossiness within this range makes it possible to have the self-adhesive layer of good air removability.

The amount of formaldehyde generated from the self-adhesive layer of the present invention is no more than 2 ppm, preferably no more than 1 ppm, more preferably no more than 0.5 ppm, and further preferably no more than 0.1 ppm. The amount of generating formaldehyde equal to or smaller than this upper limit makes it possible to preferably employ the self-adhesive layer of the present invention for places where and uses in which generation of formaldehyde is not preferable.

<Resin>

The resin used in the present invention is not specifically limited as long as being able to make the glossiness and the amount of generating formaldehyde of the self-adhesive layer of the present invention within the above described proper ranges. Examples thereof include (meth)acrylate copolymer resins, polyurethane resins, polyester resins, styrene-based resins, UV/EB curable resins, olefin-based resins, and alicyclic saturated hydrocarbon resins. Among them, in view of various good mechanical strengths and good weatherability, a (meth)acrylate copolymer resin is preferable.

((Meth)acrylate copolymer resin)

The glass transition temperature of a (meth)acrylate copolymer resin that can be used in the present invention is preferably no more than -10°C, and more preferably no more than -13°C. The glass transition temperature of the (meth)acrylate copolymer resin equal to or lower than this upper limit makes it easy for the (meth)acrylate copolymer resin to have the gel fraction, which will be described later, equal to or less than a predetermined upper limit, and as a result, makes it easy to make a self-adhesive layer and a self-adhesive laminate having a proper self-adhesion strength and good smoothness. The lower limit of the glass transition temperature of the (meth)acrylate copolymer resin is not specifically limited, and is preferably no less than -40°C. The glass transition temperature lower than -40°C leads to increased adhesion, an increased self-adhesion strength, and a weakened layer strength. In the present invention, "self-adhesion strength" is a peel strength between the self-adhesive layer and an adherend, and "layer strength" is a breaking strength of the self-adhesive layer itself.

The (meth)acrylate copolymer resin consists of no less than 50% by mass of monomeric units derived from a (meth)acrylate monomer, and no more than 50% by mass of monomeric units derived from monomer copolymerizable with this (meth)acrylate monomer; preferably consists of no less than 70% by mass of monomeric units derived from a (meth)acrylate monomer, and no more than 30% by mass of monomeric units derived from monomer copolymerizable with this (meth)acrylate monomer; and more preferably consists of no less than 80% by mass of monomeric units derived from a (meth)acrylate monomer, and no more than 20% by mass of monomeric units derived from monomer copolymerizable with this (meth)acrylate monomer. The content of monomeric units derived from a (meth)acrylate monomer within this range makes it possible to give proper adhesion.

In the present invention, the (meth)acrylate copolymer resin preferably has a N-methylol group. In such an embodiment, a N-methylol group that the (meth)acrylate copolymer resin has is preferably included in a monomeric unit of monomer copolymerizable with a (meth)acrylate monomer, and may be included in a monomeric unit of a (meth)acrylate monomer.

A (meth)acrylate monomer that can be used in the present invention is not specifically limited, and units of a (meth)acrylate monomer constituting homopolymer whose glass transition temperature is no more than -20°C are preferably contained in view of easily making the glass transition temperature of the (meth)acrylate copolymer resin no more than -10°C.

This (meth)acrylate monomer constituting homopolymer whose glass transition temperature is no more than -20°C is not specifically limited. Examples thereof include alkyl (meth)acrylates constituting homopolymer whose glass transition temperature is no more than -20°C such as ethyl acrylate (glass transition temperature of the homopolymer is -24°C), n-propyl acrylate (the same is -37°C), n-butyl acrylate (the same is -54°C), sec-butyl acrylate (the same is -22°C), n-heptyl acrylate (the same is -60°C), n-hexyl acrylate (the same is -61°C), n-octyl acrylate (the same is -65°C), 2-ethylhexyl acrylate (the same is -50°C), n-octyl methacrylate (the same is -25°C), and n-decyl methacrylate (the same is -49°C); and alkoxyalkyl (meth)acrylates constituting homopolymer whose glass transition temperature is no more than -20°C such as 2-methoxyethyl acrylate (the same is -50°C), 3-methoxypropyl acrylate (the same is -75°C), 3-methoxybutyl acrylate (the same is -56°C), and ethoxymethyl acrylate (the same is -50°C). Among them, an alkyl (meth)acrylate constituting homopolymer whose glass transition temperature is no more than -20°C, or an alkoxyalkyl (meth)acrylate constituting homopolymer whose glass transition temperature is no more than -20°C is preferable, and an alkyl (meth)acrylate constituting homopolymer whose glass transition temperature is no more than -20°C is more preferable.

If the glass transition temperature of the (meth)acrylate copolymer resin can be adjusted to no more than -10°C, methyl acrylate (glass transition temperature of the homopolymer is 10°C), methyl methacrylate (the same is 105°C), ethyl methacrylate (the same is 63°C), n-propyl methacrylate (the same is 25°C), n-butyl methacrylate (the same is 20°C) or the like may be used.

One (meth)acrylate monomer may be used alone, and two or more (meth)acrylate monomers may be used together.

It is preferable to use monomer having a N-methylol group such as N-methylolacrylamide and N-methylolmethacrylamide as the monomer copolymerizable with the (meth)acrylate monomer (hereinafter referred to as "monomer for copolymerization"). Using monomer having a N-methylol group leads to an increased layer strength and also increased close adhesion to a base material. As a result, it becomes easy to make a self-adhesive layer and a self-adhesive laminate having a proper self-adhesion strength and good smoothness. In such a view, the proportion of using monomer having a N-methylol group is such that monomeric units derived from the monomer having a N-methylol group are preferably 0.1% to 10% by mass, and more preferably 0.5% to 5% by mass if the (meth)acrylate copolymer resin is 100% by mass.

Instead of, or in addition to the monomer having a N-methylol group, another monomer may be used as the monomer for copolymerization. Monomer used other than the monomer having a N-methylol group is not specifically limited as long as being able to make the glass transition temperature of the (meth)acrylate copolymer resin no more than -10°C. Specific examples thereof include $\alpha,\beta$-ethylenically unsaturated polyvalent carboxylic acid complete esters, alkenyl aromatic monomers, vinyl cyanide monomers, esters of carboxylic acids and unsaturated alcohols, olefinic monomers, and other monomers having a functional group. One monomer may be used alone, and two or more monomers may be used together among these monomers.

Specific examples of $\alpha,\beta$-ethylenically unsaturated polyvalent carboxylic acid complete esters include dimethyl fumarate, diethyl fumarate, dimethyl maleate, diethyl maleate, and dimethyl itaconate.

Specific examples of alkenyl aromatic monomers include styrene, $\alpha$-methylstyrene, methyl $\alpha$-methylstyrene, and vinyltoluene.

Specific examples of vinyl cyanide monomers include acrylonitrile, methacrylonitrile, $\alpha$-chloroacrylonitrile, and $\alpha$-ethylacrylonitrile.

Specific examples of esters of carboxylic acids and unsaturated alcohols include vinyl acetate.

Specific examples of olefinic monomers include ethylene, propylene, butene, and pentene.

Monomer having a functional group may be used as the monomer for copolymerization for the purpose of efficient crosslinking inside or between copolymers.

Examples of a functional group here include organic acid groups, hydroxyl group, amino group, amide group, mercapto group, and epoxy groups.

Monomer having an organic acid group is not specifically limited, and representative examples thereof include monomer having an organic acid group such as carboxyl group, acid anhydride group, and sulfonic acid group. Other than them, monomer containing sulfenic acid group, sulfinic acid group, or a phosphoric acid group can be used as well.

Specific examples of monomer having carboxyl group include $\alpha,\beta$-ethylenically unsaturated monocarboxylic acids such as acrylic acid, methacrylic acid, and crotonic acid; $\alpha,\beta$-ethylenically unsaturated polyvalent carboxylic acids such as itaconic acid, maleic acid, and fumaric acid; and in addition, $\alpha,\beta$-ethylenically unsaturated polyvalent carboxylic acid partial esters such as monomethyl itaconate, monobutyl maleate, and monopropyl fumarate. Monomer having a group from which carboxyl group can be derived by hydrolysis or the like such as maleic anhydride and itaconic anhydride can be used as well.

Specific examples of monomer having sulfonic acid group include $\alpha,\beta$-unsaturated sulfonic acids such as allylsulfonic acid, methallylsulfonic acid, vinylsulfonic acid, styrenesulfonic acid, and acrylamido-2-methylpropane sulfonic acid; and salts thereof.

In a case where monomer having an organic acid group is used, such an amount of this monomer is subjected to polymerization that monomeric units derived therefrom is preferably 0.1% to 20% by mass, and more preferably 0.5% to 15% by mass if the (meth)acrylate copolymer resin is 100% by mass. The amount of using the monomer having an organic acid group within this range makes it easy to keep the viscosity of the polymerization system in polymerization within a proper range, and to prevent self-adhesion of the self-adhesive layer and a self-adhesive laminate from being damaged due to excessive progress of crosslinking copolymers.

A monomeric unit having an organic acid group is easy and preferable to be introduced into the (meth)acrylate copolymer resin by polymerization of the monomer having an organic acid group. An organic acid group may be introduced by a known polymer reaction after the (meth)acrylate copolymer resin is formed.

Examples of monomer having hydroxyl group include hydroxy alkyl(meth)acrylates such as 2-hydroxyethyl (meth)acrylate, and 3-hydroxypropyl (meth)acrylate.

Examples of monomer having amino group include N,N-dimethylaminomethyl (meth)acrylate, N,N-dimethylaminoethyl (meth)acrylate, and aminostyrene.

Examples of monomer having amide group include $\alpha,\beta$-ethylenically unsaturated carboxylic acid amide monomers such as acrylamide, methacrylamide, and N,N-dimethylacrylamide.

Examples of monomer having epoxy groups include glycidyl(meth)acrylate, and allyl glycidyl ether.

In a case where monomer having a functional group other than organic acid groups as described above is used, such an amount of this monomer is preferably used for polymerization that monomeric units derived therefrom is no more than 10% by mass if the (meth)acrylate copolymer resin is 100% by mass. The amount of using the monomer having a functional group other than organic acid groups of no more than 10% by mass makes it easy to keep the viscosity of the polymerization system in polymerization within a proper range, and to prevent self-adhesion of the self-adhesive layer and a self-adhesive laminate from being damaged due to excessive progress of crosslinking copolymers.

A polyfunctional monomer having a plurality of polymerizable unsaturated bonds may be used together as the monomer for copolymerization. An unsaturated bond-terminated polyfunctional monomer is preferable as this polyfunctional monomer. Using such a polyfunctional monomer makes it possible to introduce intramolecular and/or intermolecular crosslinking into the (meth)acrylate copolymer resin, to improve a cohesive force.

Examples of a usable polyfunctional monomer include polyfunctional (meth)acrylates such as 1,6-hexanediol di(meth)acrylate, 1,2-ethylene glycol di(meth)acrylate, 1,12-dodecanediol di(meth)acrylate, polyethylene glycol di(meth)acrylate, polypropyleneglycol di(meth)acrylate, neopentylglycol di(meth)acrylate, pentaerythritol di(meth)acrylate, trimethylolpropane tri(meth)acrylate, pentaerythritol tri(meth)acrylate, ditrimethylolpropane tri(meth)acrylate, pentaerythritol tetra(meth)acrylate, and dipentaerythritol hexa(meth)acrylate; substituted triazines such as 2,4-bis(trichloromethyl)-6-p-methoxystyrene-5-triazine; and in addition, mono-ethylenically unsaturated aromatic ketones such as 4-acryloxybenzophenone. A polyfunctional (meth)acrylate is preferable, and pentaerythritol di(meth)acrylate, pentaerythritol tri(meth)acrylate, or pentaerythritol tetra(meth)acrylate is more preferable. One polyfunctional monomer may be used alone, and two or more polyfunctional monomers may be used together.

The (meth)acrylate copolymer resin can be obtained by copolymerizing (meth)acrylate monomer and the monomer for copolymerization. A polymerization method when the (meth)acrylate copolymer resin is obtained is not specifically limited, and may be any of solution polymerization, emulsion polymerization, suspension polymerization, and bulk polymerization, and may be a method other than them. A polymerization initiator, an emulsifying agent, a dispersing agent and the like that are used for polymerization, and their amounts are not specifically limited as well. A method of adding monomer, a polymerization initiator, an emulsifying agent, a dispersing agent and the like upon polymerization is not specifically limited as well. Also, there is no limitation on polymerization temperature, pressure, stirring conditions and the like.

The (meth)acrylate copolymer resin may be in the form of either a solid or a dispersion. If the (meth)acrylate copolymer resin obtained from emulsion polymerization or dispersion polymerization as an emulsion or dispersion is used as it is, operation is easy in mixing with the crosslinking agent and a conductive compound, and it is convenient to foam the obtained emulsion or dispersion as well.

The gel fraction of the (meth)acrylate copolymer resin is preferably no more than 70%, and more preferably no more than 65%. The gel fraction within this range makes it easy to make a self-adhesive layer and a self-adhesive laminate of a proper self-adhesion strength and good smoothness.

The gel fraction in the present invention is a value obtained from the following formula by immersing 500 mg of a sample of the (meth)acrylate copolymer resin in 100 ml of ethyl acetate at ambient temperature for 3 days, thereafter filtering the insoluble content through woven metal of 80 mesh to be air-dried at ambient temperature for 15 hours, thereafter to be dried at 100°C for 2 hours, and measuring a dry mass of the dried insoluble content.

Gel fraction (% by mass) = ((dry mass of insoluble content after immersion in ethyl acetate) / (mass of sample before immersion in ethyl acetate)) $\times$ 100

<Crosslinking agent or initiator>

The crosslinking agent or the initiator used in the present invention is not specifically limited as long as being able to make the glossiness and the amount of generating formaldehyde of the self-adhesive layer of the present invention within the above described proper ranges, and can be properly selected according to the used resin and a crosslinking method to be used. Examples thereof include carbodiimide crosslinking agents; epoxy resins such as poly(ethylene glycol) diglycidyl ether, glycerin polyglycidyl ether, sorbitol polyglycidyl ether, and bisphenol A polyglycidyl ether; aziridine compounds such as ethylenimine derivatives including aldehyde and acrolein; multifunctional isocyanate crosslinking agents such as tolylene diisocyanate, trimethylolpropane tolylene diisocyanate, and diphenylmethane triisocyanate; oxazoline crosslinking agents; metal salt-based crosslinking agents; metal chelate-based crosslinking agents; peroxide-based crosslinking agents; and photoinitiators such as benzophenone photoinitiators, acetophenone photoinitiators, thioxanthone photoinitiators, sulfonium photoinitiators, and iodonium photoinitiators. One of them may be used alone, and two or more of them may be used together. Preferably, crosslinking agents that cause formaldehyde to be generated such as melamine-formaldehyde resins, urea-formaldehyde resins, and phenol-formaldehyde resins are not used.

Among them, when the (meth)acrylate copolymer resin having a N-methylol group is used as the resin, a carbodiimide crosslinking agent is preferably used in view of exerting a good strength and reducing the amount of generating formaldehyde in use.

(Carbodiimide crosslinking agent)

A carbodiimide crosslinking agent that can be used in the present invention is not specifically restricted. A compound having two or more carbodiimide groups in its molecule is preferably used. A known carbodiimide compound can be used as such a compound.

Either synthesized or commercially available carbodiimide compound may be used as a known carbodiimide compound described above. Examples of a commercially available carbodiimide compound include "DICNAL HX" manufactured by DIC Corporation and "CARBODILITE (registered trademark)" manufactured by Nisshinbo Chemical Inc. When a carbodiimide compound is synthesized, for example, a polycarbodiimide compound that is a carbodiimidized polyisocyanate by a decarboxylative condensation reaction in the presence of a carbodiimidization catalyst can be used.

Examples of a raw material polyisocyanate include hexamethylene diisocyanate (HDI), hydrogenated xylylene diisocyanate (H6XDI), xylylene diisocyanate (XDI), 2,2,4-trimethylhexamethylene diisocyanate (TMHDI), 1,12-diisocyanatedecane (DDI), norbornane diisocyanate (NBDI), and 2,4-bis-(8-isocyanateoctyl)-1,3-dioctylcyclobutane (OCDI), 4,4'-dicyclohexylmethane diisocyanate (HMDI), tetramethylxylylene diisocyanate (TMXDI), isophorone diisocyanate (IPDI), 2,4,6-triisopropylphenyldiisocyanate (TIDI), 4,4'-diphenylmethane diisocyanate (MDI), tolylene diisocyanate (TDI), and hydrogenated tolylene diisocyanate (HTDI). A carbodiimide compound can be synthesized by stirring and mixing a raw material polyisocyanate at a temperature within the range of 0 to 200°C for some length of time in the presence of an air flow or bubbling of an inert gas, and thereafter adding a carbodiimidization catalyst thereto, to be stirred and mixed.

Here, this carbodiimidization catalyst is preferably an organophosphorus compound, and especially in view of activity, is preferably a phospholene oxide. Specific examples thereof include 3-methyl-1-phenyl-2-phospholene-1-oxide, 3-methyl-1-ethyl-2-phospholene-1-oxide, 1,3-dimethyl-2-phospholene-1-oxide, 1-ethyl-2-phospholene-1-oxide, 1-methyl-2-phospholene-1-oxide, and double bond isomers thereof.

In the embodiment of using the (meth)acrylate copolymer resin and the carbodiimide crosslinking agent together, a carbodiimide group that the carbodiimide crosslinking agent has reacts with a functional group in the (meth)acrylate copolymer resin, to form intramolecular or intermolecular crosslinking structures of the (meth)acrylate copolymer resin. The carbodiimide crosslinking agent has a good crosslinking effect especially at low temperature, which makes it possible to form the self-adhesive layer of a good strength and self-adhesion, which is thus preferable.

A (meth)acrylate copolymer resin having a N-methylol group, and a melamine crosslinking agent have been often used together since long before for the purpose of improving strength. However, when an acrylate copolymer having a N-methylol group, and a melamine crosslinking agent are used together, much formaldehyde is generated in a crosslinking reaction, and remains in a self-adhesive layer as well, which causes formaldehyde to be generated when the self-adhesive layer is used. Using a carbodiimide crosslinking agent makes it possible to exert a good strength, and to extremely reduce the amount of formaldehyde generated in use even when the (meth)acrylate copolymer resin having a N-methylol group is used.

In the embodiment of using the (meth)acrylate copolymer resin and a carbodiimide crosslinking agent together, the amount of using the carbodiimide crosslinking agent is preferably 0.1 to 20 parts by mass, and more preferably 0.5 to 15 parts by mass as a solid, to 100 parts by mass of the (meth)acrylate copolymer resin. The amount of using the carbodiimide crosslinking agent within this range makes it possible to have a proper self-adhesion strength, and to improve the strength of the crosslinked resin.

(Other additives)

The resin composition may further contain a formaldehyde scavenger.

A formaldehyde scavenger that can be used in the present invention is not specifically limited as long as being a compound that can physically adsorb, or chemically react with formaldehyde. This formaldehyde scavenger may be either an inorganic compound or an organic compound including even polymer.

Specific examples of the formaldehyde scavenger include nitrogen-containing compounds such as hydroxylamine sulfate, hydroxylamine hydrochloride, ammonium acetate, urea, ethyleneurea, dicyandiamide, polyamide resins, triazine compounds, and hydrazide compounds; halogen oxides such as stabilized chlorine dioxide; and metallic salts such as disodium hydrogen phosphate, zinc sulfate, calcium chloride, and magnesium sulfate. Among them, a nitrogen-containing compound is preferable and hydroxylamine sulfate is especially preferable in view of easy availability, operability and scavenging of formaldehyde. One formaldehyde scavenger may be used individually, and two or more formaldehyde scavengers may be used together.

The resin composition may contain various additives if necessary in order to improve processability in steps of producing the self-adhesive layer and a self-adhesive laminate, and to improve properties of the self-adhesive layer and a self-adhesive laminate to be obtained.

Examples of additives include foam stabilizers, auxiliary blowing agents, thickeners, fillers, antiseptics, fungicides, gelatinizers, flame retardants, anti-aging agents, antioxidants, tackifiers, photosensitizers, and conductive compounds.

Examples of a usable foam stabilizer include ammonium salts of fatty acids such as ammonium stearate, sulfonic acid-type anionic surfactants such as alkyl sulfosuccinates, quaternary alkylammonium chlorides, amphoteric compounds of alkyl betaines, and alkanolamine salts of fatty acids.

Examples of a usable auxiliary blowing agent include sodium lauryl sulfate, sodium alkyl diphenyl ether disulphonate, and sodium polyoxyethylene alkylphenol ether sulfate.

As a thickener, the following can be used: an acrylic polymer particle, an inorganic compound particulate such as a fine silica particle, and a reactive inorganic compound such as magnesium oxide.

Examples of a usable filler include calcium carbonate, magnesium carbonate, aluminum hydroxide, magnesium hydroxide, barium hydroxide, clay, kaolin, and glass powder.

Examples of usable antiseptics and fungicides include dihydroxy dichlorophenylmethane, sodium pentachlorophenate, 2,3,4,6-tetrachloro-4-(methylsulfonyl)pyridine, 2,3,5,6-tetrachloro-4-(methylsulfonyl)pyridine, bis(tributyltin) oxide, hexahydro-1,3,5-triethyl-s-triazine, silver complexes, and zinc complexes.

Examples of a usable gelatinizer include ammonium salts such as ammonium acetate, ammonium chloride, and ammonium carbonate; alkylphenol alkylene oxide addition products, polyvinylmethyl ether, polypropylene glycol, polyether polyformal, methylcellulose, hydroxyethyl cellulose, and silicone heat sensitizers.

Examples of a usable flame retardant include phosphoric acid ester compounds, halogen phosphoric acid ester compounds, ammonium polyphosphate, antimony trioxide, zinc borate, barium metaborate, ammonium hydroxide, magnesium hydroxide, tin compounds, organophosphorous compounds, red phosphorus compounds, and silicone flame retardants.

An antioxidant based on polyphenol, hydroquinone, hindered amine, or the like can be used.

As a tackifier, any compound selected from the following can be used: rosin resins such as gum rosins, tall oil rosins, wood rosins, hydrogenated rosins, disproportionated rosins, polymerized rosins, maleated rosins, rosin glycerol esters, and hydrogenated rosin glycerol esters; terpene based resins such as terpene resins, terpene phenol resins, and aromatic modified terpene resins; petroleum resins such as aliphatic petroleum resins, alicyclic petroleum resins, and aromatic petroleum resins; coumarone-indene resins; terpene phenol-based resins; phenol resins; hydrogenated rosin esters; disproportionated rosin esters; and xylene resins.

Examples of a usable photosensitizer include amines such as n-butylamine, triethylamine, N-methyldiethanolamine, piperidine, N,N-dimethylaniline, triethylenetetramine, and diethylaminoethyl (meth)acrylate; urea compounds such as O-tolylthiourea; sulfur compounds such as s-benzyl-isothiuronium-p-toluenesulfinate; nitriles such as N,N-dimethyl-p-aminobenzonitrile; and phosphorus compounds such as sodium diethyl thiophosphate. A photosensitizer is an additive that, although not activated by irradiation with ultraviolet rays or the like when used individually, has a function of promoting progress of radical polymerization when used with a photopolymerization initiator, compared to the case of using a photopolymerization initiator individually.

<Foam>

In the present invention, the resin composition is preferably foam. The resin composition of foam makes it possible for a cross-link of the resin composition to have a foaming structure, and for the self-adhesive layer formed of this cross-link to show adsorption due to a suction cup effect utilizing microcavities. A method for foaming the resin composition will be described in detail in a foaming step S12 of a producing method described later. The self-adhesive layer to adhere by adsorption has better releasability, and is more difficult to cause adhesive residues than the self-adhesive layer to adhere only by pasting with glue. In addition, because foaming cells communicate, air bubbles come out well, and everyone can stick the self-adhesive layer neatly.

2. Self-adhesive laminate

The self-adhesive laminate of the present invention comprises the self-adhesive layer of the present invention; and a supporting layer consisting of a base material.

Specific examples of the base material used in the self-adhesive laminate include paper bases and plastic sheets.

Here, examples of paper bases include woodfree paper, art paper, coated paper, Kraft paper, carton board, and laminated paper obtained by laminating a thermoplastic resin such as polyethylene thereto.

At the same time, examples of a usable plastic sheet include polyester resins such as polyethylene terephthalate and polyethylene naphthalate; polystyrene resins; polyvinyl chloride resins; acrylic resins; polycarbonate resins; polyamide resins; fluorocarbon polymers such as polytetrafluoroethylene; polyolefine resins such as polyethylene and polypropylene; polycycloolefin resins; polyvinyl alcohol resins; poly(ethylene-vinylalcohol copolymer) resins; and sheets composed of mixtures or laminates thereof.

The thickness of the supporting layer consisting of the base material is not specifically limited, and is normally 10 μm to 200 μm.

If one having releasability is employed for the base material, the base material is peeled off after the self-adhesive layer is formed thereon as described later, to be able to be used as the self-adhesive layer.

3. Producing method

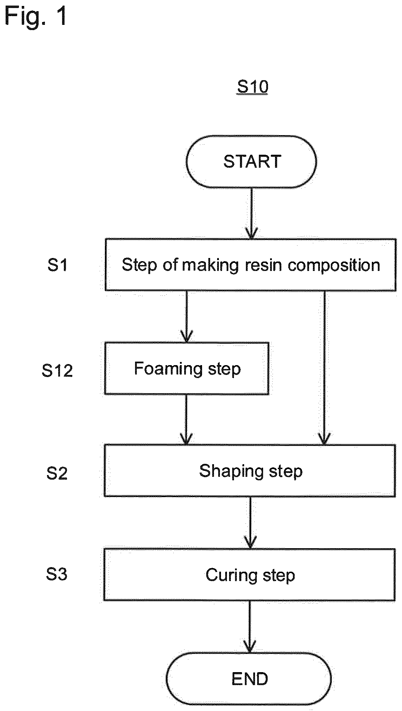

Hereinafter the method for producing the self-adhesive layer and the self-adhesive laminate will be described. Fig. 1 is an explanatory flowchart of a method S10 for producing the self-adhesive layer of the present invention (hereinafter may be abbreviated as "this producing method S10"). As shown in Fig. 1, this producing method S10 includes a step S1 of making a resin composition, a shaping step S2, and a curing step S3 in this order. The foaming step S12 is preferably included between the step S1 of making a resin composition and the shaping step S2. Hereinafter each step will be described.

3.1. Step S1 of making resin composition

The step S1 of making a resin composition is a step of making the resin composition including the resin, and the crosslinking agent and/or the initiator.
In the step S1 of making a resin composition, the resin composition can be made by mixing the above described resin, which is an essential ingredient, crosslinking agent and/or initiator, and other ingredients used if desired according to any method.
In case of being an emulsion or a dispersion, the resin can be easily mixed only by adding thereto the crosslinking agent and/or the initiator, and the other ingredients in a state of an aqueous dispersion, a water solution, or the like during stirring of the resin.
In a case where the resin is in the form of a solid, a mixing method is not specifically restricted as well. For example, mixing may be carried out using rolls, a Henschel mixer, or a kneader. Batch mixing or continuous mixing may be carried out.
Examples of a batch mixer include a kneading machine and a stirrer for high viscosity materials such as a mortar machine, a kneader, an internal mixer, and a planetary mixer. Examples of a continuous mixer include a Farrel continuous mixer etc. that are combinations of rotors and screws, and a screw type kneading machine of a special structure. Examples thereof also include a single-screw extruder and a twin-screw extruder that are used for extruding. Two or more extruders and kneading machines may be used in combination, and a plurality of extruders or kneading machines of the same type may be coupled to be used.
The form of the resin composition is not specifically limited. The resin composition in the form of emulsion or dispersion makes it convenient to obtain the self-adhesive layer.
The viscosity of this emulsion or dispersion is preferably 2000 to 10000 mPa·s, and more preferably 3500 to 5500 mPa·s.

3.2. Shaping step S2

The shaping step S2 is a step of shaping the resin composition into the form of a layer.
In the shaping step S2, a method of shaping the resin composition into the form of a layer is not specifically restricted. Preferred examples thereof include a method of coating process paper such as a polyester film on which a releasing process is carried out, with the resin composition, to be shaped into the form of a layer.
The following generally known coating device can be used for the method of coating process paper with the resin composition: a roll coater, a reverse roll coater, a screen coater, a doctor knife coater, a comma knife coater, a gravure coater, or the like. Specifically, a uniform application thickness can be obtained by using a doctor knife coater.
In order to improve the glossiness, preferably, the resin composition is evenly applied. The accuracy in thickness in coating, which is an index of evenness of application, is preferably ±10%, and more preferably ±5%. Here, the accuracy in thickness means a value measured by (thickness of made self-adhesive laminate - thickness of supporting layer = thickness of made self-adhesive layer). It is important that the coating speed in coating for realizing the glossiness shown by the self-adhesive layer of the present invention is fixed. A proper speed varies according to the coating method.

3.3. Curing step S3

The curing step S3 is a step of causing a curing reaction in the resin composition shaped in the form of a layer.
The self-adhesive layer that is formed by solidifying the resin composition in the form of a layer can be formed over process paper by causing a curing reaction in the resin composition shaped in the form of a layer. At this time, if one having releasability is used as the process paper, the self-adhesive layer can be easily separated from this process paper.
In the curing step S3, heating and drying is preferably carried out when a cross-linking reaction is caused in the resin. A method of heating and drying is not specifically restricted as long as making it possible to dry and crosslink the resin composition with which the process paper is coated. An ordinary oven with hot air circulation, hot air chamber with a hot oil circulator, far infrared ray heater chamber, or the like can be used in this method. The drying temperature is properly 60°C to 180°C. The drying conditions can be properly selected according to the characteristics, the application amount, the application thickness, etc. of the resin composition. Drying is not carried out at a fixed temperature but such multi-stage drying is preferably carried out as carrying out drying at a temperature as low as possible (preferably 60°C) at the early stage, gradually raising the temperature, and carrying out fully drying at a higher and fixed temperature (preferably 120°C to 180°C, more preferably 140°C to 180°C) at the later stage. Such multi-stage drying makes inside solvent efficiently dried without forming a film on a surface of a coating material in the first half of the curing step, and promotes a crosslinking reaction to make it possible to sufficiently solidify the coating material in the latter half of the curing step. When heating and drying is carried out by continuous passage through a drying oven or a crosslinking oven, the line speed is normally 5 to 100 m/min, and preferably 10 to 80 m/min. Lowering the line speed leads to a more quantity of heat to be given, which increases the layer strength though the productivity declines, which is not preferable. The resin composition can be also cured by light such as UV. In a case of photo-curing, the resin composition containing a photo-curable resin and a photoinitiator is irradiated with a predetermined amount of light by a lamp such as a high pressure mercury lamp (main wavelength: 365 nm), to obtain a cured product. According to the embodiment of photo-curing in the curing step S3, the curing time can be shortened, which leads to increased productivity.

The density, thickness, hardness, etc. of the self-adhesive layer to be obtained are adjusted according to the formation, the solid content, and the conditions for solidification by heating and drying of the resin composition, the mixing ratio of air bubbles in the embodiment of including the foaming step S12 described later, etc. The thickness of the self-adhesive layer is preferably 0.003 to 3 mm, more preferably 0.005 to 1 mm, further preferably 0.005 to 0.5 mm, and especially preferably 0.005 to 0.2 mm. The thickness thinner than 0.003 mm leads to poor impact absorbency, insufficient retention of items, and an incomplete function of protecting surfaces of items in a case where the self-adhesive layer of the present invention is used as an item retention material or an item surface protection material. The thickness thicker than 3 mm leads to a deteriorated strength of the self-adhesive layer, which is not preferable as well. In view of improving the glossiness, the thickness of the self-adhesive layer is preferably thin. The density of the self-adhesive layer is not specifically restricted, and is preferably 0.1 to 1.0 g/cm$^3$ in view of impact absorbency.

Generally, the self-adhesive layer or the self-adhesive laminate obtained in the curing step S3 is wound by a winder after a separator film is stuck on a surface thereof which has self-adhesion, and is cut by press cutting, with a slitter, etc., to be processed to have a usable size.

When the self-adhesive laminate is produced, using the base material as the process paper in the shaping step S2 makes it possible to form the self-adhesive layer on the base material in the curing step S3, to make it possible to produce the self-adhesive laminate including an adsorbing layer consisting of the self-adhesive layer, and the supporting layer consisting of the base material.

3.4. Foaming step S12

As described above, the foaming step S12 is preferably included between the step S1 of making a resin composition and the shaping step S2. Including the foaming step S12 makes it possible to produce a self-adhesive layer having a foaming structure and showing adsorption due to a suction cup effect utilizing microcavities.

The foaming step S12 is a step of foaming the resin composition, to obtain foam of the resin composition.

In the foaming step S12, foaming the resin composition made in the step S1 of making a resin composition makes it possible to obtain foam in an unsolidified state. In a case where the resin composition is in the form of an emulsion or dispersion, a foamed emulsion or foamed dispersion is obtained.

Generally, mechanical foaming is employed for a foaming method. The foaming magnification may be properly adjusted, is generally 1.1 to 5 times, and in view of improving the glossiness, is preferably 1.1 to 4 times, is more preferably 1.2 to 3 times, and is further preferably 1.5 to 2 times. A way of mechanical foaming is not specifically restricted. This mechanical foaming can be carried out by mixing a certain volume of air into an emulsion of the resin composition, to be stirred with a continuous or batch type Oakes mixer, whipper, or the like. A foamed emulsion obtained according to this way is creamy.

Instead of this mechanical foaming, the foam can be also prepared by, for example, a method of making a proper synthetic resin such as a vinylidene chloride copolymer a shell wall, and adding a thermally expandable microcapsule that encompasses a hydrocarbon compound of a low boiling point to an acrylic resin emulsion or a butadiene synthetic rubber emulsion.

4. Use

Examples of printing that is able to be carried out on a base material face of the self-adhesive laminate of the present invention include: offset printing, seal printing, flexographic printing, silk screening, gravure printing, and printing with a laser printer, a thermal transfer printer, an ink jet printer, and the like.

The self-adhesive laminate on the base material face on which printing is carried out can be used as a building decoration material, a sticking material for advertising, or material for stationery or toys. Examples of uses thereof include a card for sales promotion, what is called a POP card (such as a poster, a sticker and a display), an underlay (such as a place mat, a table mat and a pencil board), a menu for fast food restaurants serving hamburgers, sushi, yakisoba, etc., a catalogue, a panel, a plate (substitution for a metal plate), a bromide, a price list for in-shop display, an information board (such as store, direction and destination directory, for sweets and groceries, etc.), a POP for gardening (such as a plant label), a road sign (for funerals, housing display parks, etc.), a display board (displaying "keep out", operation on forestry roads, or the like), a calendar (with images), a simple whiteboard, a mouse pad, a coaster, a printed matter that is a substitution for that made with a label printer, and an adhesive label.

The self-adhesive layer and the self-adhesive laminate of the present invention can be preferably used as an item surface protection material or an item retention material that is directed to various optical components, precision components, etc. as well.

Because the self-adhesive layer can be stuck and peeled off any number of times, forming the self-adhesive layer on a base material for various boxes, bags, etc. makes it possible to use the self-adhesive layer for tentative fixing and a sealing material when an opening is closed. Especially, the self-adhesive layer is preferable as tentative fixing after a package of food, luxuries, daily necessities, or the like from which particles therein are easy to scatter over the outside is opened because such particles are hard to attach to the self-adhesive layer. Further, since the self-adhesive layer can increase airtightness of a package such as a box and a bag, the content can be kept fresh and prevented from spoiling due to oxygen, moisture, and the like by closing again a package of food or luxuries that is/are easy to spoil, via the self-adhesive layer after once opening the package.

Thus, the self-adhesive layer can be used as the use when a package may be repeatedly opened and closed and the use when the content has to be kept fresh as described above, such as a package of sweets, coffee, tea, cigarettes or a detergent.

The self-adhesive layer and the self-adhesive laminate of the present invention are hard to cause adhesive residues even in the use thereof under high temperature and high humidity environments. For example, the self-adhesive layer and the self-adhesive laminate of the present invention can prevent occurrence of adhesive residues even after left under an environment at no less than 60°C in temperature and no less than 80% in humidity for 2 weeks. Thus, they can be preferably used under a severe environment of high temperature and high humidity such as the outside environment in summer as well. Since they are hard to cause adhesive residues under a severe environment of high temperature and high humidity, it can be said that the effect of few adhesive residues in use under a normal environment such as the inside environment of an air-conditioned room is also better than conventional one.

The self-adhesive layer and the self-adhesive laminate of the present invention make it possible to reduce the amount of generating formaldehyde, and also can make the amount of generating formaldehyde smaller than the detection limit (for example, less than 0.1 ppm) by proper setting of the formation of the resin composition. Thus, they can be preferably employed for places where and uses in which generation of formaldehyde is inhibited or not preferable. That is, the self-adhesive layer and the self-adhesive laminate of the present invention can be preferably used for building interior decoration materials, material for stationery and toys, etc.

Examples

The present invention will be described in more detail in Examples below. The present invention is not restricted to Examples. "Parts" and "%" used below will be by mass unless otherwise specified.

[Material characteristics]

<Measurement of glass transition temperature (Tg) of acrylate copolymer resin>

The glass transition temperature (Tg) of an acrylate copolymer resin that was used for material of a self-adhesive laminate described below was measured with the following method: applying an acrylate copolymer resin-containing aqueous dispersion onto 50 $\mu$m of a polyethylene terephthalate film in thickness with a 250 $\mu$m applicator to be dried at ambient temperature for 24 hours, to obtain a resin film; and while using this film as a sample, carrying out heat flux differential scanning calorimetry (heat flux DSC) with a differential scanning calorimeter (DSC6220 manufactured by SII NanoTechnology Inc.) at -50°C to 160°C in measurement temperature at 10°C/min in heating rate, conforming to JIS K 7121, to measure the glass transition temperature (midpoint glass transition temperature ($T_{mg}$))(°C).

<Measurement of gel fraction of acrylate copolymer resin>

The gel fraction of an acrylate copolymer resin-containing aqueous dispersion used as material of a self-adhesive laminate described later was measured with the following method: applying an acrylate copolymer resin onto 50 μm of a polyethylene terephthalate film in thickness with a 200 μm applicator to be dried at ambient temperature for 24 hours, to obtain a resin film; precisely weighing a certain amount (X) (approximately 500 mg) of this film as a sample, to be immersed in 100 ml of ethyl acetate at ambient temperature for 3 days; thereafter filtering the insoluble content through a woven metal of 80 mesh to be air-dried at ambient temperature for 15 hours, thereafter to be dried at 100°C for 2 hours, and to be cooled at ambient temperature; and thereafter measuring the mass of the sample (Y). The gel fraction was calculated by substitution of the values of X and Y into the following formula.

$$\text{Gel Fraction (\%)} = (Y) / (X) \times 100$$

[Evaluation items]

<Glossiness (at 60°)>

The glossiness of a surface of a self-adhesive layer of the self-adhesive laminate made as described later was measured using a gloss meter (GP-60A manufactured by Tokyo Denshoku. Co., Ltd.), conforming to JIS Z 8741. The results are shown in Table 3. In a case where the result according to this evaluation is 33 or more, it can be said that the surface of the sheet was excellent in smoothness.

<Amount of generating formaldehyde>

A self-adhesive laminate was made as described later. Further, a separator film was stuck onto a surface of a self-adhesive layer, and thereafter was cut out into a size of 200 mm × 200 mm, to prepare a test piece. The test piece was put into a Tedlar bag of 5 L in volume, and was hermetically sealed up therein. The bag was charged with 2 L of air, and was left to stand in a constant temperature oven that was set at 23°C and RH 50% for 6 hours, and thereafter the concentration of formaldehyde in the bag was measured with a detector tube (No. 91L manufactured by Gastec Corporation). The results are shown in Table 3. Cases where the concentration of formaldehyde was lower than 0.1 ppm that was the detection limit of this measurement method and where formaldehyde was not detected were shown by "<0.1". When this measuring result is no more than 2 ppm, it can be said to be a small amount of generating formaldehyde.

<Air removability when stuck>

A self-adhesive laminate was made as described later, thereafter was cut out into a regular square of 100 mm × 100 mm, and was put onto a glass plate so that a face on a self-adhesive layer side was in contact with the glass plate, and a roller of 0.5 gf in load was reciprocated once on a supporting layer side to stick the self-adhesive laminate onto the glass plate. At this time, evaluation was carried out according to whether air whose area calculated by the following was no less than 10 mm² stayed or not. The results are shown in Table 3, where cases where air whose area calculated by the following was no less than 10 mm² did not stay is shown by "good", and where such air stayed is shown by "bad". When this evaluation is "good", it can be said to have little involved air and good air removability.
The area of staying air was calculated by drawing a rectangle that was as small as being able to surround the largest staying air, and measuring the area of this rectangle.

[Making self-adhesive laminate]

(Example 1)

Into a mixing vessel, 100 parts of an acrylate copolymer resin (I) (formation: 45 of ethyl acrylate / 46 of butyl acrylate / 10 of acrylonitrile / 1.8 of N-methylolacrylamide; glass transition temperature: -15.3°C; gel fraction: 41.5%)-containing aqueous dispersion (solid content: 55%), 5 parts of a carbodiimide crosslinking agent (DICNAL HX manufactured by DIC Corporation; solid content: 40%), and 3.5 parts of a titanium oxide aqueous dispersion (DISPERSE WHITE HG-701 manufactured by DIC Corporation; solid content: 66%) were added and stirred with a disperser. Next, while continued to be stirred, 5 parts of a thickener (carboxylic acid-modified acrylate polymer. ARON B-300K manufactured by Toagosei Co., Ltd.; solid content: 44%), and 6 parts of a foam stabilizer [1/1 mixture of: mixture of an amphoteric compound of an alkyl betaine and a fatty acid alkanolamide (DICNAL M-20 manufactured by DIC Corporation; solid content: 40%) / sulfonic acid-type anionic surfactant (DICNAL M-40 manufactured by DIC Corporation; solid content: 35%)] were added in this order, and lastly approximately 0.6 parts of an ammonia solution (manufactured by Taiseikakou-sya; content: 28%) were added thereto, and the viscosity was adjusted to 4500 mPa·s, to obtain a resin composition Z1. The formation of the resin composition Z1 is summarized in Table 1.

This resin composition Z1 was stirred by means of a beater, to be whipped so that the foaming magnification was twice. Further, stirring was continued for 5 minutes at a lower stirring speed.

The obtained foam was applied onto a base material (50 μm of a polyethylene terephthalate film in thickness) with a 0.3 mm applicator, to be put into a drying oven, and kept at 80°C for 1.33 minutes; at 120°C for 1.33 minutes; and at 140°C for 1.33 minutes, to be dry-crosslinked, and a self-adhesive laminate according to Example 1 which was formed by laminating 180 μm of a self-adhesive layer onto the base material was obtained.

(Example 2)

Into a mixing vessel, 100 parts of an acrylate copolymer resin (II) (formation: copolymer resin of 45 of ethyl acrylate / 46 of butyl acrylate / 10 of acrylonitrile / 1.8 of N-methylolacrylamide; glass transition temperature: -14.5°C; gel fraction: 51.8%)-containing aqueous dispersion (solid content: 55%), 3 parts of a carbodiimide crosslinking agent (CARBODILITE (registered trademark) E-02 manufactured by Nisshinbo Chemical Inc.; solid content: 40%), and 3.5 parts of a titanium oxide aqueous dispersion (DISPERSE WHITE HG-701 manufactured by DIC Corporation; solid content: 66%) were added and stirred with a disperser. Next, while continued to be stirred, 6 parts of a foam stabilizer [1/1 mixture of: mixture of an amphoteric compound of an alkyl betaine and a fatty acid alkanolamide (DICNAL M-20 manufactured by DIC Corporation; solid content: 40%) / sulfonic acid-type anionic surfactant (DICNAL M-40 manufactured by DIC Corporation; solid content: 35%)], 0.6 parts of an ammonia solution (manufactured by Taiseikakou-sya; content: 28%), and lastly approximately 4.5 parts of a thickener (carboxylic acid-modified acrylate polymer. ARON B-300K manufactured by Toagosei Co., Ltd.; solid content: 44%) were added thereto, and the viscosity was adjusted to 5000 mPa·s, to obtain a resin composition Z2. The formation of the resin composition Z2 is summarized in Table 1.

This resin composition Z2 was foamed by means of a foaming machine so that the foaming magnification was 1.6 times, to obtain foam.

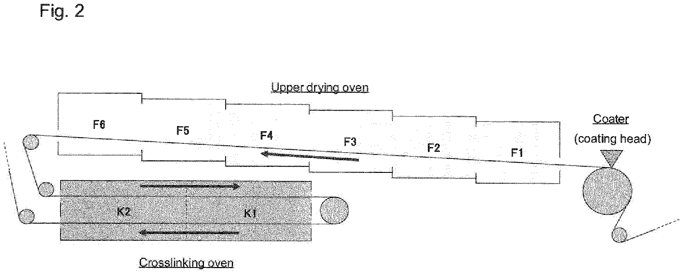

Fig. 2 shows a schematic view of a coater (coating head) used below, and an upper drying oven (F1 to F6) and a crosslinking oven (K1, K2) through which the foam applied onto a base material passed.

The obtained foam was applied onto a base material (polyethylene terephthalate film of 110 μm in thickness) by means of the coater so that the thickness of a film to be formed was 180 μm, to pass the insides of the ovens at 15 m/min in line speed at temperatures as the oven temperature pattern shown by A in Table 2 (drying oven F1: 60°C, drying oven F2: 80°C, drying oven F3: 100°C, drying oven F4: 130°C, drying oven F5: 135°C, drying oven F6: 140°C, crosslinking oven K1: 140°C, and crosslinking oven K2: 140°C), to obtain a self-adhesive laminate according to Example 2 which was formed by laminating 180 μm of a self-adhesive layer onto the base material.

(Example 3)

A self-adhesive laminate according to Example 3 was obtained in the same manner as in Example 2 except that a resin composition Z3 containing 100 parts of an acrylate copolymer resin (III) (formation: copolymer resin of 45 of ethyl acrylate / 46 of butyl acrylate / 10 of acrylonitrile / 1.8 of N-methylolacrylamide; glass transition temperature: -14.9°C; gel fraction: 47.8%)-containing aqueous dispersion (solid content: 55%) (its formation is summarized in Table 1) was used.

(Example 4)

A self-adhesive laminate according to Example 4 which was formed by laminating 100 μm of a self-adhesive layer onto a base material was obtained in the same manner as in Example 3 except that the oven temperature pattern was changed to that shown by B in Table 2, and that the foam was applied onto the base material (polyethylene terephthalate film of 80 μm in thickness) so that the thickness of a film to be formed was 100 μm.

(Comparative Example 1)

Into a mixing vessel, 100 parts of an acrylate copolymer resin (IV) (formation: copolymer resin of 48 of ethyl acrylate / 47 of butyl acrylate / 6 of acrylonitrile / 1.4 of N-methylolacrylamide; glass transition temperature: -25.9°C; gel fraction: 43.1%)-containing aqueous dispersion (solid content: 55%), 5 parts of a melamine crosslinking agent (BECKAMINE M-3 manufactured by DIC Corporation; solid content: 80%), 0.5 parts of a crosslinking promoter (CATALYST ACX manufactured by DIC Corporation; solid content: 35%), and 3.5 parts of a titanium oxide aqueous dispersion (DISPERSE WHITE HG-701 manufactured by DIC Corporation; solid content: 66%) were added and stirred with a disperser. Next, while continued to be stirred, 6 parts of a foam stabilizer [1/1 mixture of: mixture of an amphoteric compound of an alkyl betaine and a fatty acid alkanolamide (DICNAL M-20 manufactured by DIC Corporation) / sulfonic acid-type anionic surfactant (DICNAL M-40 manufactured by DIC Corporation)], 0.6 parts of an ammonia solution (manufactured by Taiseikakou-sya; content: 28%), and lastly approximately 4.5 parts of a thickener (carboxylic acid-modified acrylate polymer. ARON B-300K manufactured by Toagosei Co., Ltd.; solid content: 44%) were added thereto, and the viscosity was adjusted to 5000 mPa·s, to obtain a resin composition Z4. The formation of the resin composition Z4 is summarized in Table 1.

This resin composition Z4 was foamed by means of a foaming machine so that the foaming magnification was twice, to obtain foam.

The obtained foam was applied onto a base material (polyethylene terephthalate film of 110 μm in thickness) by means of the coater so that the thickness of a film to be formed was 180 μm, to pass the insides of the ovens at 15 m/min in line speed at temperatures as the oven temperature pattern shown by C in Table 2, to obtain a self-adhesive laminate according to Comparative Example 1 which was formed by laminating 180 μm of a self-adhesive layer onto the base material.

(Comparative Example 2)

A self-adhesive laminate according to Comparative Example 2 which was formed by laminating 100 μm of a self-adhesive layer onto a base material was obtained in the same manner as in Comparative Example 1 except that the oven temperature pattern was changed to that shown by D in Table 2, and that the foam was applied onto the base material (polyethylene terephthalate film of 80 μm in thickness) so that the thickness of a film to be formed was 100 μm.

(Comparative Example 3)

A self-adhesive laminate according to Comparative Example 3 was obtained in the same manner as in Example 1 except that a resin composition Z5 containing 100 parts of an acrylate copolymer resin (V) (formation: copolymer resin of 45 of ethyl acrylate / 45 of butyl acrylate / 8 of acrylonitrile / 2 of itaconic acid; glass transition temperature: -20.2°C; gel fraction: 89.6%)-containing aqueous dispersion (solid content: 55%) (its formation is summarized in Table 1) was used.

Table 1

| Resin composition | | Z1 | Z2 | Z3 | Z4 | Z5 |
|---|---|---|---|---|---|---|
| Resin | (I) Tg: -15.3°C; Gel fraction: 41.5% | 100 | | | | |
| | (II) Tg: -14.5°C; Gel fraction: 51.8% | | 100 | | | |
| | (III) Tg: -14.9°C; Gel fraction: 47.8% | | | 100 | | |
| | (IV) Tg: -25.9°C; Gel fraction: 43.1% | | | | 100 | |
| | (V) Tg: -20.2°C; Gel fraction: 89.6% | | | | | 100 |
| Cross-linking agent | DICNAL HX | 5.0 | | | | |
| | CARBODILITE E-02 | | 3.0 | 5.0 | | |
| | BECKAMINE M-3 | | | | 5.0 | 5.0 |
| Cross-linking promoter | CATALYST ACX | | | | 0.5 | 0.5 |
| Pigment | HG-701 | 3.5 | 3.5 | 3.5 | 3.5 | 3.5 |
| Foam stabilizer | M-20 | 3.0 | 3.0 | 3.0 | 3.0 | 3.0 |
| | M-40 | 3.0 | 3.0 | 3.0 | 3.0 | 3.0 |
| Auxiliary thickener | 28% of ammonia solution | 0.6 | 0.6 | 0.6 | 0.6 | 0.6 |
| Thickener | B-300K | 5.0 | 4.5 | 4.5 | 4.5 | 4.5 |

Table 2

| | | Upper drying oven | | | | | | Crosslinking oven | |
|---|---|---|---|---|---|---|---|---|---|
| | | F1 | F2 | F3 | F4 | F5 | F6 | K1 | K2 |
| Length of oven | | 5 m | 5 m | 5 m | 5 m | 5 m | 5 m | 30 m (15 m × 2) | |
| Oven temperature pattern | A | 60°C | 80°C | 100°C | 130°C | 135°C | 140°C | 140°C | 140°C |
| | B | 60°C | 80°C | 100°C | 120°C | 125°C | 130°C | 120°C | 120°C |
| | C | 90°C | 100°C | 110°C | 125°C | 125°C | 135°C | 140°C | 140°C |
| | D | 90°C | 100°C | 100°C | 115°C | 125°C | 125°C | 120°C | 120°C |

Table 3

| Items | Ex. 1 | Ex. 2 | Ex. 3 | Ex. 4 | Comp. Ex. 1 | Comp. Ex 2 | Comp. Ex. 3 |
|---|---|---|---|---|---|---|---|
| Glossiness (at 60°) | 38.5 | 45.3 | 50 | 56.5 | 34.4 | 38.8 | 31.9 |
| CH2O emission rate | 0.2 | 0.5 | 0.8 | < 0.1 | 2.1 | 2.6 | 0.1 |
| Air removability | good | good | good | good | good | good | bad |
| Resin composition | Z1 | Z2 | Z3 | Z3 | Z4 | Z4 | Z5 |
| Oven temperature pattern | - | A | A | B | C | D | - |
| Line speed [m/min] | - | 15 | 15 | 15 | 15 | 15 | - |
| Foaming magnification | 2.0 | 1.6 | 1.6 | 1.6 | 2.0 | 2.0 | 2.0 |
| Thickness of base material [μm] | 50 | 110 | 110 | 80 | 110 | 80 | 50 |
| Thickness of self-adhesive layer [μm] | 180 | 180 | 180 | 100 | 180 | 100 | 180 |

As shown in Table 3, the sheets of Examples 1 to 4 whose glossiness was within the range of the present invention had good air removability, and the amounts of formaldehyde generated therefrom were small. In contrast, the sheets of Comparative Examples 1 and 2 had good air removability because the glossiness thereof was within the range of the present invention, but the amounts of formaldehyde generated therefrom were large. The sheet of Comparative Example 3 had poor air removability because the glossiness thereof was low while the amount of formaldehyde generated therefrom was small.

**Claims**

1. A self-adhesive layer comprising reaction resultant of a resin composition, the resin composition including resin and a crosslinking agent and/or an initiator,
   wherein glossiness is 33 to 90, and
   an amount of generating formaldehyde is no more than 2 ppm.

2. The self-adhesive layer according to claim 1, wherein the resin is a (meth)acrylate copolymer resin.

3. The self-adhesive layer according to claim 2, wherein a glass transition temperature of the (meth)acrylate copolymer resin is no more than -10°C.

4. The self-adhesive layer according to claim 2 or 3, wherein
   the (meth)acrylate copolymer resin has a N-methylol group, and has a gel fraction of no more than 70%.

5. The self-adhesive layer according to any one of claims 1 to 4, wherein the resin composition is foam.

6. The self-adhesive layer according to claim 5, wherein foaming magnification of the foam is 1.1 to 4 times.

7. The self-adhesive layer according to any one of claims 1 to 6, wherein the crosslinking agent is a carbodiimide crosslinking agent.

8. The self-adhesive layer according to any one of claims 1 to 7,
   wherein the resin composition contains 100 parts by mass of the (meth)acrylate copolymer resin, and 0.1 to 20 parts by mass of a carbodiimide crosslinking agent.

9. The self-adhesive layer according to any one of claims 1 to 8, wherein a thickness is 0.005 mm to 0.5 mm.

10. A self-adhesive laminate comprising:

    the self-adhesive layer according to any one of claims 1 to 9; and
    a supporting layer consisting of a base material.

11. The self-adhesive laminate according to claim 10, wherein the base material is a plastic sheet or a paper base.

Fig. 1

S10

```
                    ┌──────────────┐
                    │    START     │
                    └──────┬───────┘
                           │
                           ▼
   S1     ┌──────────────────────────────────────┐
          │   Step of making resin composition   │
          └──────┬────────────────────┬──────────┘
                 │                     │
                 ▼                     │
   S12    ┌──────────────┐            │
          │ Foaming step │            │
          └──────┬───────┘            │
                 │                     │
                 ▼                     ▼
   S2     ┌──────────────────────────────────────┐
          │            Shaping step               │
          └──────────────────┬───────────────────┘
                             │
                             ▼
   S3     ┌──────────────────────────────────────┐
          │             Curing step               │
          └──────────────────┬───────────────────┘
                             │
                             ▼
                    ┌──────────────┐
                    │     END      │
                    └──────────────┘
```

Fig. 2

Upper drying oven

F6    F5    F4    F3    F2    F1

Coater
(coating head)

K2    K1

Crosslinking oven

**INTERNATIONAL SEARCH REPORT**

| | International application No. |
|---|---|
| | PCT/JP2017/015904 |

A.  CLASSIFICATION OF SUBJECT MATTER
*C09J7/00*(2006.01)i, *C09J7/02*(2006.01)i, *C09J11/06*(2006.01)i, *C09J133/04*
(2006.01)i

According to International Patent Classification (IPC) or to both national classification and IPC

B.  FIELDS SEARCHED

Minimum documentation searched (classification system followed by classification symbols)
C09J1/00-201/10

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2015-086339 A  (DIC Corp.),<br>07 May 2015 (07.05.2015),<br>claims; paragraphs [0023], [0077] to [0078];<br>examples<br>(Family: none) | 1-3,7-10 |
| X | JP 2012-180495 A  (Nitto Denko Corp.),<br>20 September 2012 (20.09.2012),<br>claims; paragraphs [0105] to [0108]; examples<br>& US 2014/0004342 A1<br>claims; paragraphs [0128] to [0132]; examples<br>& WO 2012/108289 A1      & EP 2674464 A1<br>& CN 103347971 A         & KR 10-2014-0048842 A | 1-3,5-6,9-11 |

[X] Further documents are listed in the continuation of Box C.        [ ] See patent family annex.

* Special categories of cited documents:
"A"  document defining the general state of the art which is not considered   to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search<br>06 June 2017 (06.06.17) | Date of mailing of the international search report<br>18 July 2017 (18.07.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2017/015904 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2009-155504 A (DIC Corp.), 16 July 2009 (16.07.2009), claims; examples (Family: none) | 1-11 |
| A | JP 2011-213967 A (3M Innovative Properties Co.), 27 October 2011 (27.10.2011), claims; examples (Family: none) | 1-11 |
| A | JP 1-115982 A (Nitto Denko Corp.), 09 May 1989 (09.05.1989), claims; examples (Family: none) | 1-11 |
| A | JP 2003-076308 A (Act Co., Ltd.), 14 March 2003 (14.03.2003), claims; examples (Family: none) | 1-11 |
| A | JP 2006-176693 A (Nippon Zeon Co., Ltd.), 06 July 2006 (06.07.2006), claims; examples (Family: none) | 1-11 |
| A | JP 2013-104043 A (Bridgestone Corp.), 30 May 2013 (30.05.2013), claims; examples (Family: none) | 1-11 |
| P,X | WO 2016/147679 A1 (Nippon Zeon Co., Ltd.), 22 September 2016 (22.09.2016), claims; paragraphs [0001], [0007], [0017]; examples (Family: none) | 1-11 |
| P,X | WO 2016/147680 A1 (Nippon Zeon Co., Ltd.), 22 September 2016 (22.09.2016), claims; paragraphs [0001], [0007], [0019]; examples (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006176693 A